(19) Europäisches Patentamt
European Patent Office
Office européen des brevets

(11) Veröffentlichungsnummer: **0 355 446 B1**

# (12) EUROPÄISCHE PATENTSCHRIFT

(45) Veröffentlichungstag der Patentschrift: **16.06.93**

(51) Int. Cl.[5]: **C08F 10/00**, C08F 10/06, C08F 4/643

(21) Anmeldenummer: **89113742.4**

(22) Anmeldetag: **25.07.89**

## (54) 1-Olefin Isoblockpolymer und Verfahren zu seiner Herstellung.

(30) Priorität: **30.07.88 DE 3826075**

(43) Veröffentlichungstag der Anmeldung:
**28.02.90 Patentblatt 90/09**

(45) Bekanntmachung des Hinweises auf die Patenterteilung:
**16.06.93 Patentblatt 93/24**

(84) Benannte Vertragsstaaten:
**BE DE ES FR GB IT NL**

(56) Entgegenhaltungen:
**EP-A- 355 447**
**EP-A- 0 269 986**
**EP-A- 0 302 424**
**EP-A- 0 344 887**

(73) Patentinhaber: **HOECHST AKTIENGESELLSCHAFT**
**Postfach 80 03 20**
**W-6230 Frankfurt am Main 80(DE)**

(72) Erfinder: **Dolle, Volker, Dr.**
**Hattersheimer Strasse 15**
**W-6233 Kelkheim (Taunus)(DE)**
Erfinder: **Rohrmann, Jürgen, Dr.**
**Die Ritterwiesen 10**
**W-6237 Liederbach(DE)**
Erfinder: **Winter, Andreas, Dr.**
**Gundelhardtstrasse 2**
**W-6233 Kelkheim (Taunus)(DE)**
Erfinder: **Antberg, Martin, Dr.**
**Sachsenring 10**
**W-6238 Hofheim am Taunus(DE)**
Erfinder: **Klein, Robert, Dr.**
**Im Neufeld 46**
**W-6000 Frankfurt am Main(DE)**

EP 0 355 446 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein 1-Olefin-Isoblockpolymer mit langen isotaktischen Sequenzen und ein Verfahren zu seiner Herstellung.

Es ist bekannt, daß Polypropylen in verschiedenen Strukturisomeren existiert:

(a) Hochisotaktisches Polypropylen, in dessen Molekülketten fast alle tertiären C-Atome die gleiche Konfiguration aufweisen,

(b) isotaktisches Stereoblock-PP, in dessen Molekülketten isotaktische Blöcke entgegengesetzter Konfiguration regelmäßig miteinander abwechseln,

(c) syndiotaktisches Polypropylen, in dessen Molekülketten jedes zweite tertiäre C-Atom die gleiche Konfiguration besitzt,

(d) ataktisches Polypropylen, in dessen Molekülketten die tertiären C-Atome eine regellose Konfiguration aufweisen

und

(e) ataktisch-isotaktisches Stereoblock-PP, in dessen Molekülketten isotaktische und ataktische Blöcke miteinander abwechseln.

Es ist ein Verfahren zur Herstellung von isotaktischen Stereoblockpolymeren bekannt, bei welchem Propylen mit Hilfe eines Metallocens eines Metalls der Gruppe IVb, Vb oder VIb des Periodensystems polymerisiert wird (vgl. US-PS 4,522,982). Dieses Metallocen ist eine Mono-, Di- oder Tricyclopentadienyl- oder substituierte Cyclopentadienyl-Metallverbindung, insbesondere des Titans. Als Cokatalysator dient ein Aluminoxan.

Allerdings sind die bevorzugt verwendeten Titanocene in verdünnter Lösung nicht ausreichend thermisch stabil, um in einem technischen Verfahren verwendbar zu sein. Außerdem werden bei diesem Verfahren Produkte mit größerer Länge der isotaktischen Sequenzen (n größer 6) nur bei sehr tiefer Temperatur (-60 °C) erhalten. Schließlich müssen die Cokatalysatoren in vergleichsweise hoher Konzentration eingesetzt werden, um eine ausreichende Kontaktausbeute zu erreichen, was dazu führt, daß die im Polymerprodukt enthaltenen Katalysatorreste in einem seperaten Reinigungsschritt entfernt werden müssen.

Ferner ist bekannt, daß man Stereoblockpolymere von 1-Olefinen mit langen isotaktischen Sequenzen bei technisch günstigen Polymerisationstemperaturen mittels eines Katalysators erhalten kann, welcher aus einer Metallocenverbindung mit durch chirale Gruppen substituierten Cyclopentadienylresten und einem Aluminoxan besteht (vgl. EP-A 269987).

Weiterhin ist bekannt, daß Steroblockpolymere von 1-Olefinen mit breiter uni- oder multimodaler Molmassenverteilung erhalten werden können, wenn für die Polymerisation der 1-Olefine ein Katalysator verwendet wird, welcher aus einem Brücken enthaltenden chiralen Metallocen und einem Aluminoxan besteht (vgl. EP-A 269986). Die Polymeren eignen sich besonders gut für die Herstellung transparenter Folien.

Auch ist bekannt, daß beim Einsatz eines Katalysators auf der Basis von Biscyclopentadienylverbindungen des Zirkons und einem Aluminoxan beim Polymerisieren von Propylen nur ataktisches Polymer erhalten wird (vgl. EP-A 69951).

Schließlich kann mittels löslicher stereorigider chiraler Zirkonverbindungen hochisotaktisches Polypropylen hergestellt werden (vgl. EP-A 185 918).

Es wurde ein Polymerisationsverfahren gefunden, bei welchem ein Polymer mit regelmäßigem Molekülaufbau mit hoher Molmasse bei technisch günstigen Prozeßtemperaturen in hoher Ausbeute erhalten wird.

Die Erfindung betrifft somit ein Isoblockpolymer eines 1-Olefins der Formel $RCH=CH_2$, worin R einen Alkylrest mit 1 bis 28 C-Atomen bedeutet, mit Molekülketten, die aus isotaktischen Sequenzen bestehen, welche durch jeweils genau eine Monomereinheit mit entgegengesetzter Konfiguration voneinander getrennt sind und eine Sequenzlänge von 3 bis 50 Monomereinheiten aufweisen.

Weiterhin betrifft die Erfindung ein Verfahren zur Herstellung des vorgenannten Isoblockpolymeren durch Polymerisation eines 1-Olefins der Formel $RCH=CH_2$, worin R ein Alkylrest mit 1 bis 28 C-Atomen bedeutet, bei einer Temperatur von -60 bis 100 °C, einem Druck von 0,5 bis 100 bar, in Lösung, in Suspension oder in der Gasphase, in Gegenwart eines Katalysators, welcher aus einem Metallocen und einem Aluminoxan besteht, dadurch gekennzeichnet, daß als Metallocen Indenyldimethylsilyl-(cyclopentadienyl)-hafniumdichlorid oder Indenyldimethylsily-(cyclopentadienyl)-zirkondichlorid verwendet wird. Besonders bevorzugt ist das 1-Olefin Propylen. Bei der Polymerisation von Propylen nach dem erfindungsgemäßen Verfahren können zwei verschiedene Metallocene zur Herstellung von Polypropylenblends verwendet werden.

Das erfindungsgemäße Isoblockpolymer ist ein Polymer eines 1-Olefins der Formel $R-CH=CH_2$, worin R einen Alkylrest mit 1 bis 28 C-Atomen, vorzugsweise 1 bis 10 C-Atomen, insbesondere einem C-Atom

bedeutet, beispielsweise Propylen, Buten-(1), Hexen-(1), 4-Methylpenten-(1), Octen-(1). Insbesondere ist das Polymer ein Propylenpolymer.

Die Molekülketten dieses Polymers bestehen aus isotaktischen Sequenzen, welche durch jeweils eine Monomereinheit mit entgegengesetzter Konfiguration voneinander getrennt sind und Sequenzen von 3 bis 50 Monomereinheiten aufweisen.

Infolge dieses sterischen Aufbaus sind die erfindungsgemäßen Isoblockpolymeren je nach Molmasse und isotaktischer Sequenzlänge amorph oder teilkristallin. In Abhängigkeit von der Kristallinität werden die Polymeren als körnige Pulver oder als kompakte Massen erhalten. Die teilkristallinen Isoblockpolymeren weisen im Vergleich zu isotaktischen Polymeren einen niedrigeren Schmelzpunkt auf. Isoblockpolymere besitzen kautschukartige Eigenschaften.

Der für das erfindungsgemäße Verfahren zu verwendende Katalysator besteht aus einer Metallocenverbindung und einem Aluminoxan.

Die vorstehend beschriebenen Metallocene können nach folgendem Reaktionsschema hergestellt werden:

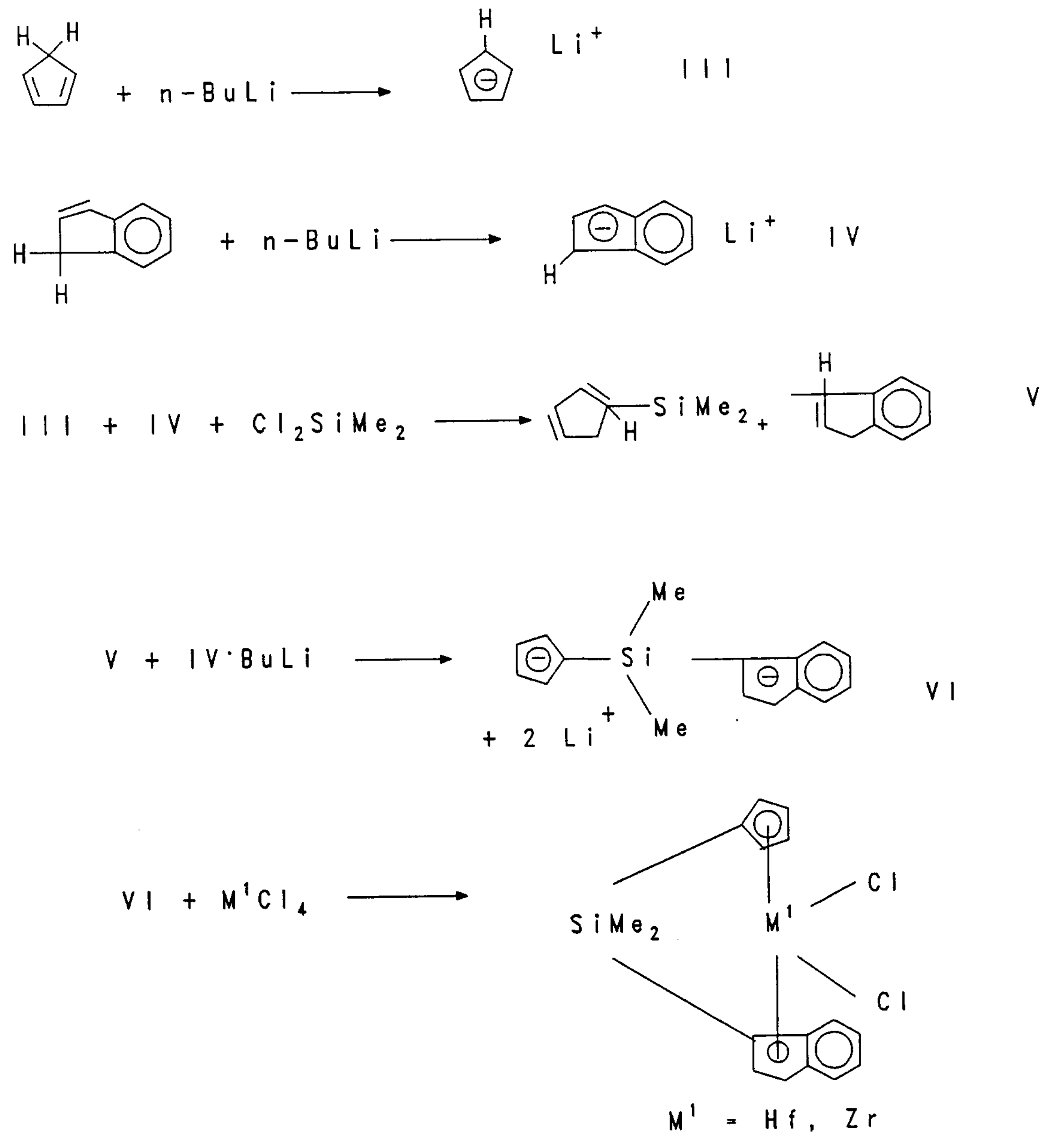


Die eingesetzten Metallocenverbindungen sind Indenyl-(h5-cyclopentadienyl)-dimethylsilyl-hafniumdichlorid (= 1) und Indenyl-(h5-cyclopentadienyl)-dimethylsilylzirkondichlorid(= 2).

Der Aktivator ist eine Aluminoxan der Formel (I)

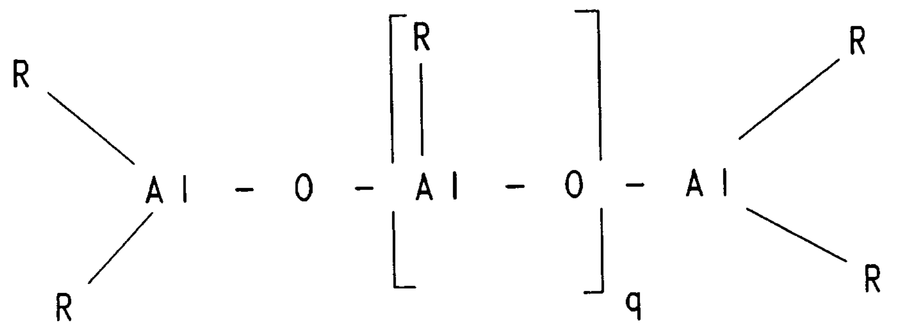

(I)

für den linearen Typ und/oder der Formel (II)

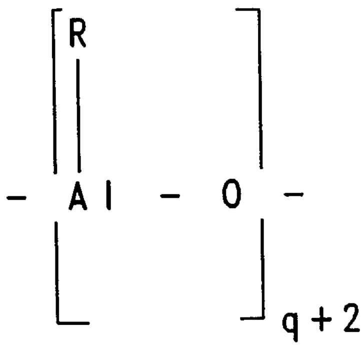

(II)

für den cyclischen Typ. In diesen Formeln bedeuten R eine $C_1$-$C_6$-Alkylgruppe, vorzugsweise Methyl, Ethyl oder Isobutyl, insbesondere Methyl, und q eine ganze Zahl von 2 bis 50, bevorzugt 10 bis 40. Die exakte Struktur des Aluminoxans ist jedoch nicht gesichert.

Das Aluminoxan kann auf verschiedene Art und Weise hergestellt werden.

Eine Möglichkeit ist die vorsichtige Zugabe von Wasser zu einer verdünnten Lösung eines Aluminiumtrialkyls, indem die Lösung des Aluminiumtrialkyls und das Wasser jeweils in kleinen Portionen in eine vorgelegte größere Menge eines inerten Lösungsmittels eingetragen werden und zwischendurch das Ende der Gasentwicklung jeweils abgewartet wird.

Bei einem anderen Verfahren wird fein gepulvertes Kupfersulfatpentahydrat in Toluol aufgeschlämmt und in einem Glaskolben unter Inertgas bei etwa -20 °C mit soviel Aluminiumtrialkyl versetzt, daß für je 4 Al-Atome etwa 1 mol $CuSO_4 \cdot 5H_2O$ zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30 °C ansteigt. Anschließend wird das in Toluol gelöste Aluminoxan von dem Kupfersulfat abfiltriert und die Lösung unter Vakuum eingeengt. Es wird angenommen, daß bei diesem Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -20 bis 100 °C in einem inerten aliphatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1:1 bis 50:1 - vorzugsweise 5:1 - und die Reaktionszeit, die durch Abspaltung des Alkans kontrollierrt werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen $Al_2(SO_4)_3 \cdot 16H_2O$und $Al_2(SO_4)_3 \cdot 18H_2O$ mit dem besonders hohen Kristallwassergehalt von 16 bzw. 18 mol $H_2O$/mol $Al_2(SO_4)_3$.

Eine weitere Variante zur Herstellung von Aluminoxanen besteht darin, Aluminiumtrialkyl, vorzugsweise Aluminiumtrimethyl, in dem im Polymerisationskessel vorgelegten Suspensionsmittel, vorzugsweise im

flüssigen Monomeren, in Heptan oder Toluol, zu lösen und dann die Aluminiumverbindung mit Wasser umzusetzen.

Neben den zuvor geschilderten Verfahren zur Herstlelung von Aluminoxanen gibt es weitere, welche brauchbar sind.

Es ist möglich, das Metallocen vor dem Einsatz in der Polymerisationsreaktion mit einem Aluminoxan der Formel (I) und (II) vorzuaktivieren. Dadurch wird die Polymerisationsaktivität deutlich erhöht.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78 °C bis 100 °C, vorzugsweise 0 bis 70 °C.

Der erfindungsgemäß zu verwendende Katalysator wird zur Polymerisation von 1-Olefinen der Formel $R\text{-}CH=CH_2$, in der R einen Alkylrest mit 1 bis 28 C-Atomen, vorzugsweise 1 bis 10 C-Atomen, insbesondere einem C-Atom bedeutet, eingesetzt, beispielsweise Propylen, Buten-(1), Hexen-(1), 4-Methylpenten-(1), Octen-(1). Besonders bevorzugt ist Propylen. Bei der Polymerisation von Propylen nach dem erfindungsgemäßen Verfahren können zwei verschiedene Metallocene zur Herstellung von Polypropylenblends verwendet werden.

Die Polymerisation wird in bekannter Weise in Lösung, in Suspension oder in der Gasphase, kontinuierlich oder diskontinuierlich, ein- oder mehrstufig bei einer Temperatur von -60 bis 100 °C, vorzugsweise 0 bis 80 °C durchgeführt. Der Druck beträgt 0,5 bis 100 bar. Bevorzugt ist die Polymerisation in dem technisch besonders interessanten Druckbereich von 5 bis 60 bar.

Dabei wird die Metallocenverbindung in einer Konzentration, bezogen auf das Übergangsmetall, von $10^{-3}$ bis $10^{-7}$, vorzugsweise $10^{-4}$ bis $10^{-6}$ mol Übergangsmetall pro $dm^3$ Lösemittel bzw. pro $dm^3$ Reaktorvolumen angewendet. Das Aluminoxan wird in einer Konzentration von $10^{-4}$ bis $10^{-1}$ mol, vorzugsweise $10^{-3}$ bis $10^{-2}$ mol pro $dm^3$ Lösemittel bzw. pro $dm^3$ Reaktorvolumen verwendet. Prinzipiell sind aber auch höhere Konzentrationen möglich.

Wenn die Polymerisation als Suspensions- oder Lösungsmittelpolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Butan, Pentan, Hexan, Heptan, Isooctan, Cyclohexan, Methylcyclohexan genannt. Weiterhin kann eine Benzin- bzw. hydrierte Dieselölfraktion, die sorgfältig von Sauerstoff, Schwefelverbindungen und Feuchtigkeit befreit worden ist, benutzt werden. Brauchbar ist auch Toluol. Bevorzugt wird das zu polymerisierende Monomere als Lösemittel oder Suspensionsmittel eingesetzt. Die Molmasse des Polymerisats kann in bekannter Weise geregelt werden; vorzugsweise wird dazu Wasserstoff verwendet. Die Dauer der Polymerisation ist beliebig, da das erfindungsgemäß zu verwendende Katalysatorsystem einen nur geringen zeitabhängigen Abfall der Polymerisationsaktivität zeigt.

Das erfindungsgemäße Verfahren zeichnet sich dadurch aus, daß die bevorzugt verwendeten Zirkon- und Hafnium-Verbindungen sehr temperaturstabil sind, so daß sie auch bei Temperaturen bis etwa 90 °C eingesetzt werden können. Außerdem können die als Cokatalysatoren dienenden Aluminoxane in geringer Konzentration als bisher zugesetzt werden. Schließlich ist es nunmehr möglich, Isoblockpolymere bei technisch interessanten Temperaturen herzustellen.

Die nachfolgenden Beispiele sollen die Erfindung erläutern. Es bedeuten

| | |
|---|---|
| VZ | = Viskositätszahl in $cm^3/g$, |
| $M_w$ | = Molmassengewichtsmittel in g/mol, |
| $M_w/M_n$ | = Polydispersität ermittelt durch Gelpermeationschromatographie (GPC) und |
| II | = Isotaktischer Index, bestimmt durch $^{13}C$-NMR-Spektroskopie |
| $n_{iso}$ | = Mittlere Länge der isotaktischen Sequenzen. |

Isoblockpolymere können NMR-spektroskopisch mit Hilfe einer Triadenanalyse nachgewiesen und von anderen 1-Olefinpolymeren unterschieden werden (vgl. A. Zambelli et al., Macromolecules 8, 687-689 (1975)). Für Isoblockpolymere ist die Markoff-Statistik gültig, wenn die nachfolgende Gleichung erfüllt ist

$$2(rr)/(mr) = 1$$

Die Meßergebnisse sind in der Tabelle zusammengefaßt.

Beispiel 1

Ein trockener 16 $dm^3$ Kessel wurde mit Stickstoff gespült und mit 10 $dm^3$ flüssigem Propylen befüllt. Dann wurden 96 $cm^3$ toluolische Methylaluminoxanlösung (= MAO, entsprechend 68 mmol Al, mittlerer Oligomerisierungsgrad n = 30) zugegeben und der Ansatz bei 30 °C 15 Minuten gerührt.

Parallel dazu werden 43 mg (0,088 mmol) Indenylcyclopentadienyl-dimethylsilylhafniumdichlorid in 46 ml MAO (= 33 mmol Al) gelöst und durch 15 minütiges Stehenlassen voraktiviert. Die Lösung wurde dann in den Kessel gegeben. Das Polymerisationssystem wurde auf eine Temperatur von 70 °C gebracht und dann 5 Stunden bei dieser Temperatur gehalten.

Es wurden 0,69 kg Isoblockpolymer erhalten. Die Aktivität des Metallocens betrug somit 1,57 kg PP/mmol Hf/h oder 3,2 kg PP/g Metallocen/h.

Am Polymeren wurden die folgenden analytischen Daten ermittelt: VZ = 19 $cm^3$/g, $M_w$ = 16100 g/mol, $M_n$ = 5800 g/mol, $M_w/M_n$ = 2,8 II = 72,8 mol%, $n_{iso}$ = 5,3.

Beispiel 2

Es wurde analog Beispiel 1 verfahren. Als Polymerisationstemperatur wurde jedoch 60 °C gewählt. Die Polymerisationsdauer betrug 5 Stunden. Es wurden 32,7 mg (= 0,067 mmol) Metallocenverbindung eingesetzt.
0,15 kg Isoblockpolymer wurden erhalten. Die Aktivität des Metallocens betrug somit 0,45 kg PP/mmol Hf/h oder 0,92 kg PP/g Metallocen/h.

Am Polymeren wurden die folgenden analytischen Daten ermittelt:
VZ = 35 $cm^3$/g, $M_w$ = 16200 g/mol, $M_n$ = 9300 g/mol, $M_w/M_n$ = 1,7, II = 72,6 mol%, $n_{iso}$ = 5,0.

Beispiel 3

Es wurde analog Beispiel 1 verfahren. Als Polymerisationstemperatur wurde jedoch 50 °C gewählt. Die Polymerisationsdauer betrug 25 Stunden. 30,0 mg (= 0,062 mmol) Metallocenverbindung wurden in der entsprechenden Menge MAO eingesetzt. Es wurden 0,43 kg Isoblockpolymer erhalten. Die Aktivität des Metallocens betrug somit 0,28 kg PP/mmol Hf/h oder 0,57 kg PP/g Metallocen/h. Am Polymeren wurden die folgenden analytischen Daten ermittelt: VZ = 43 $cm^3$/g, $M_w$ = 31000 g/mol, $M_n$ = 14300 g/mol, $M_w/M_n$ = 2,2, II = 74,0 mol%, $n_{iso}$ = 5,7.

Beispiel 4

Verfahren wurde analog Beispiel 1. Als Polymerisationstemperatur wurde jedoch 40 °C gewählt. Die Polymerisationsdauer betrug 35 Stunden. Es wurden 34,4 mg (= 0,071 mmol) Metallocenverbindung eingesetzt. 0,28 kg Isoblockpolymer wurden erhalten. Die Aktivität des Metallocens betrug somit 0,11 kg PP/mmol Hf/h oder 0,23 kg PP/g Metallocen/h.
Am Polymeren wurden die folgenden analytischen Daten ermittelt:
VZ = 70 $cm^3$/g, $M_w$ = 56100 g/mol, $M_n$ = 24100 g/mol, $M_w/M_n$ = 2,3, II = 75,5 mol%, $n_{iso}$ = 6,0.

Beispiel 5

Es wurde analog Beispiel 1 verfahren. Als Polymerisationstemperatur wurde jedoch 10 °C gewählt. Die Polymerisationsdauer betrug 12 Stunden. Eingesetzt wurden 207,7 mg (= 0,426 mmol) Metallocenverbindung. 0,07 kg Isoblockpolymer wurden erhalten. Die Aktivität des Metallocens betrug 13,7 g PP/mmol Hf/h oder 0,03 kg PP/g Metallocen/h.
Am Polymeren wurden die folgenden analytischen Daten ermittelt:
VZ = 62 $cm^3$/g, $M_w$ = 59900 g/mol, $M_n$ = 29800 g/mol, $M_w/M_n$ = 2,0, II = 75,7 mol%, $n_{iso}$ = 6,9.

Beispiel 6

Es wurde analog Beispiel 1 verfahren. Als Metallocenverbindung wurde aber 5,0 mg (= 0,013 mmol) Indenyl-cyclopentadienyl-dimethylsilyl-zirkondichlorid gewählt (das Metallocen wurde in 20 $cm^3$ MAO (= 13,4 mmol Al) gelöst, zum flüssigen Propylen wurden 40 $cm^3$ MAO (= 26,8 mmol Al) gegeben).

Das Polymerisationssystem wurde auf eine Temperatur von 60 °C gebracht und dann 15 h Stunden bei dieser Temperatur gehalten. Es wurden 1,2 kg Isoblockpolymer erhalten. Die Aktivität des Metallocens

betrug somit 6,15 kg PP/mmol Zr/h oder 16,0 kg PP/g Metallocen/h.
Am Polymeren wurden die folgenden analytischen Daten ermittelt:
VZ = 30 $cm^3$/g, $M_w$ = 17000 g/mol, $M_n$ = 5800 g/mol, $M_w/M_n$ = 2,9, II = 69,0 mol%, $n_{iso}$ = 4,6.

Beispiel 7

Es wurde analog Beispiel 6 verfahren. Als Polymerisationstemperatur wurde jedoch 50 °C gewählt. Die Polymerisationsdauer betrug 5 Stunden. 15,0 mg (= 0,038 mmol) Metallocenverbindung wurden eingesetzt und 1,1 kg Isoblockpolymer wurden erhalten. Die Aktivität des Metallocens betrug 5,8 kg PP/mmol Zr/ch oder 14,7 kg PP/g Metallocen/h.
Am Polymeren wurden die folgenden analytischen Daten ermittelt:
VZ = 28 $cm^3$/g, $M_w$ = 25200 g/mol, $M_n$ = 7900 g/mol, $M_w/M_n$ = 3,2, II = 71,5 mol%, $n_{iso}$ = 4,9.

Beispiel 8

Es wurde analog Beispiel 6 verfahren. Als Polymerisationstemperatur wurde jedoch 40 °C gewählt. Die Polymerisationsdauer betrug 15 Stunden. Es wurden 13,5 mg (= 0,034 mmol) Metallocenverbindung eingesetzt und 0,60 kg Isoblockpolymer erhalten. Die Aktivität des Metallocens betrug somit 1,18 PP/mmol Zr/h oder 3,0 kg PP/g Metallocen/h.

Vergleichsbeispiel A

In einem zu Beispiel 1 analogen Versuch wurde mit rac-Bisindenyl-dimethylsilylzirkondichlorid ein Polymer mit der VZ von 43,5 $cm^3$/g, einem $M_w$ von 35200 und einem $M_w/M_n$ von 2,5 erhalten. Der isotaktische Index betrug 96,6 %, die isotaktische Sequenzlänge wurde zu 51 bestimmt.

Tabelle: Zusammenfassung der Ergebnisse

| Metallocen | T [°C] | Kontaktaktivität [kg/PP/g Ko/h] | $M_w$ [g/mol] | $M_w/M_n$ | $n_{iso}$ | II [%] | mm | mr | rr | 2(rr)/(mr) |
|---|---|---|---|---|---|---|---|---|---|---|
| 1 | 70 | 3,2 | 16100 | 2,8 | 5,3 | 72,8 | 59,0 | 27,5 | 13,5 | 0,98 |
| 1 | 60 | 0,9 | 16200 | 1,7 | 5,0 | 72,6 | 56,2 | 28,7 | 13,1 | 0,91 |
| 1 | 50 | 0,43 | 31000 | 2,2 | 5,7 | 74,0 | 61,0 | 26,0 | 13,0 | 1,0 |
| 1 | 40 | 0,23 | 56100 | 2,3 | 6,0 | 75,5 | 63,0 | 25,0 | 12,0 | 0,96 |
| 1 | 10 | 0,03 | 59900 | 2,0 | 6,9 | 77,5 | 66,3 | 22,3 | 11,4 | 1,02 |
| 2 | 60 | 16,0 | 17000 | 2,9 | 4,6 | 69,0 | 54,0 | 30,0 | 16,0 | 1,07 |
| 2 | 50 | 14,7 | 25200 | 3,2 | 4,9 | 71,5 | 57,0 | 29,0 | 14,0 | 0,97 |
| 2 | 40 | 3,0 | 21900 | 3,4 | 4,7 | 71,0 | 56,0 | 30,0 | 14,0 | 0,93 |

**Patentansprüche**

**Patentansprüche für folgende Vertragsstaaten : BE, DE, FR, GB, IT, NL**

**1.** Isoblockpolymer eines 1-Olefins der Formel RCH $=CH_2$, worin R einen Alkylrest mit 1 bis 28 C-Atomen bedeutet, mit Molekülketten, die aus isotaktischen Sequenzen bestehen, welche durch jeweils genau eine Monomereinheit mit entgegengesetzter Konfiguration voneinander getrennt sind und eine Sequenzlänge von 3 bis 50 Monomereinheiten aufweisen.

**2.** Isoblockpolypropylen mit Molekülketten, die aus isotaktischen Sequenzen bestehen, welche durch jeweils genau eine Propyleneinheit mit entgegengesetzter Konfiguration voneinander getrennt sind und eine Sequenzlänge von 3 bis 50 Propyleneinheiten aufweisen.

**3.** Verfahren zur Herstellung des Isoblockpolymeren nach Anspruch 1 durch Polymerisation eines 1-Olefins der Formel $RCH = CH_2$, worin R ein Alkylrest mit 1 bis 28 C-Atomen bedeutet, bei einer Temperatur von -60 bis 100 °C, einem Druck von 0,5 bis 100 bar, in Lösung, in Suspension oder in der Gasphase, in Gegenwart eines Katalysators, welcher aus einem Metallocen und einem Aluminoxan besteht, dadurch gekennzeichnet, daß als Metallocen Indenyldimethylsilyl-(cyclopentadienyl)-hafniumdichlorid oder Indenyldimethylsilyl-(cyclopentadienyl)-zirkondichlorid verwendet wird.

**4.** Verfahren nach Anspruch 3, dadurch gekennzeichnet, daß das 1-Olefin Propylen ist.

**5.** Verfahren nach Anspruch 3, dadurch gekennzeichnet, daß zur Herstellung von Polypropylenblends zwei verschiedene Metallocene eingesetzt werden.

**6.** Verwendung des Isoblockpolymers nach Anspruch 1 zur Herstellung von Polymermischungen.

**7.** Verwendung nach Anspruch 6 zur Herstellung von Polypropylenblends.

**Patentansprüche für folgenden Vertragsstaat : ES**

**1.** Verfahren zur Herstellung eines Isoblockpolymeren eines 1-Olefins der Formel $RCH = CH_2$, worin R einen Alkylrest mit 1 bis 28 C-Atomen bedeutet, mit Molekülketten, die aus isotaktischen Sequenzen bestehen, welche durch jeweils genau eine Monomereinheit mit entgegengesetzter Konfiguration voneinander getrennt sind und eine Sequenzlänge von 3 bis 50 Monomereinheiten aufweisen, durch Polymerisation eines 1-Olefins der vorgenannten Formel bei einer Temperatur von -60 °C bis 100 °C, einem Druck von 0,5 bis 100 bar, in Lösung, in Suspension oder in der Gasphase, in Gegenwart eines Katalysators, welcher aus einem Metallocen und einem Aluminoxan besteht, dadurch gekennzeichent, daß als Metallocen Indenyldimethysilyl-(cyclopentadienyl)-hafniumdichlorid oder Indenyldimethylsilyl-(cyclopentadienyl)-zirkondichlorid vewendet wird.

**2.** Verfahren nach Anspruch 1, dadurch gekennzeichnet, daß das 1-Olefin Propylen ist.

**3.** Verfahren nach Anspruch 1, dadurch gekennzeichnet, daß zur Herstellung von Polypropylenblends zwei verschiedene Metallocene eingesetzt werden.

**4.** Verwendung des Isoblockpolymers, herstellbar nach Anspruch 1, zur Herstellung von Polymermischungen.

**5.** Verwendung nach Anspruch 4 zur Herstellung von Polypropylenblends.

**Claims**
**Claims for the following Contracting States : BE, DE, FR, GB, IT, NL**

**1.** An isoblock polymer of a 1-olefin of the formula $RCH = CH_2$, in which R is an alkyl radical having 1 to 28 carbon atoms, with molecular chains comprising isotactic sequences which are separated from one another in each case by exactly one monomer unit of opposite configuration and have a sequence length of 3 to 50 monomer units.

**2.** An isoblock polypropylene with molecular chains comprising isotactic sequences which are separated from one another in each case by exactly one propylene unit of opposite configuration and have a sequence length of 3 to 50 propylene units.

**3.** A process for the preparation of an isoblock polymer as claimed in claim 1 by polymerization of a 1-olefin of the formula $RCH = CH_2$, in which R is an alkyl radical having 1 to 28 carbon atoms, at a temperature of -60 to 100 °C and a pressure of 0.5 to 100 bar, in solution, in suspension or in the gas phase, in the presence of a catalyst comprising a metallocene and an aluminoxane, the metallocene

used being indenyl(dimethylsilyl)(cyclopentadienyl)hafnium dichloride or indenyl(dimethylsilyl)-(cyclopentadienyl)zirconium dichloride.

**4.** The process as claimed in claim 3, wherein the 1-olefin is propylene.

**5.** The process as claimed in claim 3, wherein two different metallocenes are used for the preparation of polypropylene blends.

**6.** The use of an isoblock polymer as claimed in claim 1 for the preparation of polymer mixtures.

**7.** The use as claimed in claim 6 for the preparation of polypropylene blends.

**Claims for the following Contracting State : ES**

**1.** A process for the preparation of an isoblock polymer of a 1-olefin of the formula $RCH=CH_2$, in which R is an alkyl radical having 1 to 28 carbon atoms, with molecular chains comprising isotactic sequences which are separated from one another in each case by exactly one monomer unit of opposite configuration and have a sequence length of 3 to 50 monomer units, by polymerization of a 1-olefin of the above-mentioned formula at a temperature of -60 to 100 °C and a pressure of 0.5 to 100 bar, in solution, in suspension or in the gas phase, in the presence of a catalyst comprising a metallocene and an aluminoxane, the metallocene used being indenyl(dimethylsilyl)(cyclopentadienyl)hafnium dichloride or indenyl(dimethylsilyl)(cyclopentadienyl)zirconium dichloride.

**2.** The process as claimed in claim 1, wherein the 1-olefin is propylene.

**3.** The process as claimed in claim 1, wherein two different metallocenes are used for the preparation of polypropylene blends.

**4.** The use of an isoblock polymer preparable as claimed in claim 1 for the preparation of polymer mixtures.

**5.** The use as claimed in claim 4 for the preparation of polypropylene blends.

**Revendications**
**Revendications pour les Etats contractants suivants : BE, DE, FR, GB, IT, NL**

**1.** Isocopolymère séquencé d'une oléfine-1 de formule $RCH=CH_2$, dans laquelle R est un radical alkyle ayant de 1 à 28 atomes de carbone, et comportant des chaînes moléculaires constituées de séquences isotactiques qui sont séparées les unes des autres exactement par un motif monomère ayant une configuration opposée, avec une longueur de séquence de 3 à 50 motifs monomères.

**2.** Isocopolymère séquencé comportant des chaînes moléculaires constituées de séquences isotactiques séparées les unes des autres par un motif propylène ayant une configuration opposée, et comportant une longueur de séquences de 3 à 50 motifs propylène.

**3.** Procédé pour préparer l'isocopolymère séquencé selon la revendication 1 par polymérisation d'une oléfine-1 de formule $RCH=CH_2$, dans laquelle R est un radical alkyle ayant de 1 à 28 atomes de carbone, à une température de -60 à 100 °C, sous une pression de 0,5 à 100 bar, en solution, en suspension ou en phase gazeuse, en présence d'un catalyseur constitué d'un métallocène et d'un aluminoxane, caractérisé en ce qu'on utilise comme métallocène le dichlorure d'indényldiméthylsilyl-(cyclopentadiényl)-hafnium ou le dichlorure d'indényldiméthylsilyl-(cyclopentadiényl)-zirconium.

**4.** Procédé selon la revendication 3, caractérisé en ce que l'oléfine-1 est le propylène.

**5.** Procédé selon la revendication 3, caractérisé en ce qu'on utilise pour préparer les mélanges de polypropylène deux métallocènes différents.

**6.** Utilisation de l'isocopolymère séquencé selon la revendication 1 pour préparer des mélanges de polymères.

**7.** Utilisation selon la revendication 6, pour préparer des mélanges de polypropylène.

**Revendications pour l'Etat contractant suivant : ES**

**1.** Procédé pour préparer un isocopolymère séquencé d'une oléfine-1 de formule $RCH=CH_2$, dans laquelle R est un radical alkyle ayant de 1 à 28 atomes de carbone, et comportant des chaînes moléculaires constituées de séquences isotactiques qui sont séparées les unes des autres exactement par un motif monomère ayant une configuration opposée, avec une longueur de séquence de 3 à 50 motifs monomères, par polymérisation d'une oléfine-1 ayant la formule ci-dessus, à une température de -60 à 100 °C, sous une pression de 0,5 à 100 bar, en solution, en suspension ou en phase gazeuse, en présence d'un catalyseur constitué d'un métallocène et d'un aluminoxane, caractérisé en ce qu'on utilise comme métallocène le dichlorure d'indényldiméthylsilyl-(cyclopentadiényl)-hafnium ou le dichlorure d'indényldiméthylsilyl-(cyclopentadiényl)-zirconium.

**2.** Procédé selon la revendication 1, caractérisé en ce que l'oléfine-1 est le propylène.

**3.** Procédé selon la revendication 1, caractérisé en ce qu'on utilise pour préparer des mélanges de polypropylène deux métallocènes différents.

**4.** Utilisation de l'isocopolymère séquencé pouvant être préparé selon la revendication 1, pour préparer des mélanges de polymères.

**5.** Utilisation selon la revendication 4, pour préparer des mélanges de polypropylène.